Europäisches Patentamt

European Patent Office

Office européen des brevets

(19)

(11) Publication number: **0 078 618**
A2

# (12) EUROPEAN PATENT APPLICATION

(21) Application number: **82305397.0**

(22) Date of filing: **11.10.82**

(51) Int. Cl.³: **A 23 F 5/18**

(30) Priority: **04.11.81 US 318091**

(43) Date of publication of application: **11.05.83**
**Bulletin 83/19**

(84) Designated Contracting States: **DE FR GB IT SE**

(71) Applicant: **GENERAL FOODS CORPORATION, 250 North Street, White Plains, N.Y. 10625 (US)**

(72) Inventor: **Hamell, Matthew, 26, Cypress Lane, Orangeburg, N.Y. 10968 (US)**
Inventor: **Zanno, Paul Robert, 491, Sierra Vista Lane, Valley Cottage, N.Y. 10989 (US)**
Inventor: **Hickernell, Gary Lee, 12, Terrich Court, Ossining New York 10562 (US)**

(74) Representative: **Baillie, Iain Cameron et al, c/o Ladas & Parry Isartorplatz 5, D-8000 München 2 (DE)**

(54) Process for upgrading hydrolysis coffee extract.

(57) A hydrolyzed coffee extract is contacted with a polymeric resin for adsorption of the harsh, bitter and metallic notes characteristic of such an extract. The polymeric resin is of the non-ionogenic macroreticular cross-linked type. The hydrolysis coffee extract thereby upgraded may be combined with an atmospheric extract or a conventional commercial coffee extract and dried, producing a high yield, good tasting soluble coffee product.

EP 0 078 618 A2

E-2878

## DESCRIPTION
## PROCESS FOR UPGRADING HYDROLYSIS COFFEE EXTRACT

### Technical Field

This invention relates to a process for upgrading a hydrolyzed coffee extract by adsorption of the off-flavors from the hydrolysis extract. More particularly, the invention involves adsorbing the characteristic bitter, harsh and metallic undesirable off-flavor compounds of hydrolyzed coffee extract by contact with a polymeric resin.

### Background Art

The art establishes that there are two mechanisms involved in the commercial extraction of roasted coffee. The first mechanism is atmospheric extraction wherein the water soluble constituents of roasted coffee are extracted from the coffee particle at about atmospheric pressure and a temperature less than that of boiling water. The flavor of atmospheric extract is as good as that obtained from a home brew of roasted and ground coffee. Unfortunately though, the yield of atmospheric extraction is only approximately 20% by weight of the original coffee charge.

The yield of coffee solids in commercial coffee extraction is increased to roughly 50% by weight of the original coffee charge through the second extraction mechanism, known as hydrolysis. Said hydrolysis is the solublization of otherwise insoluble starches and celluloses present in roasted coffee. Hydrolyzed coffee solids are generated by operating the extraction process at a temperature of at least 175°C and at an elevated pressure. A hydrolyzed coffee extract exhibits characteristic bitter, harsh and metallic off flavors. The presence of hydrolyzed coffee solids then, may introduce off-flavor notes into the overall flavor of commercial coffee extract.

Methods of lessening the adverse impact of certain off-flavors introduced in soluble coffee extract production are known, but such prior art methods do not focus on removing the undesirable flavors from the hydrolyzed coffee solids. For instance, U.S. Patent No. 2,888,349 to Morrow et al. and U.S. Patent No. 3,458,320 to Niven both involve producing coffee extracts by each of the two extraction mechanisms hereinbefore described. However, it is the object of both inventions to work only with the atmospheric extract for lessening of the off-flavors prior to combination with the untreated hydrolysis extract.

The art also describes the use of an adsorbent for the removal of aromatic organic compounds from an aqueous coffee extract in U.S. Patent No. 3,418,134 to Rooker and U.S. Patent No. 3,531,463 to Kleeman et al. Similarly, German Patent Application No. DT24 52 693 describes the use of a macroreticular cross-linked resin to trap aroma substances from tomato concentrate and cocoa butter. So too, U.S. Patent No. 4,031,251 to Margolis et al. discloses use of such a resin to trap caffeine and other coffee substances from a coffee extract. The object of this prior art is to capture desirable constituents

- 3 -

for possible addition to the product. It is not the object of such art to improve flavor by removing undesirable constituents from an extract.

The present invention is directed towards trapping undesirable off-flavor constituents from a hydrolysis extract thereby upgrading the flavor and improving the value of said hydrolyzed coffee extract.

## Disclosure of the Invention

A process for the upgrading of hydrolyzed coffee extract has now been discovered wherein said hydrolysis extract is contacted with a polymeric resin which resin effects a separation of the bitter, harsh and metallic undesirable off-flavor compounds from the desirable hydrolyzed coffee solids by adsorption.

The type of resin used is a non-ionogenic macroreticular cross-linked resin which is known in the art and is available commercially as, for example, XAD-4 resin produced by Rohm and Haas Co., Philadelphia, Pa. This type of resin is generally prepared by suspension polymerization of polymerizable ethylenically unsaturated molecules comprising 2 to 100, preferably at least 50, weight percent of at least one polyvinyl benzene monomer which is divinylbenzene, trivinylbenzene, an alkyldivinylbenzene having from 1 to 4 methyl or ethyl groups substituted in the benzene nucleus or an alkyltrivinylbenzene having 1, 2 or 3 methyl or ethyl groups substituted in the benzene nucleus. In addition to the homopolymers and copolymers of these polyvinylbenzene monomers, one or more of them may be copolymerized with up to 98% but preferably less than 50% by weight of the total monomer mixture of: (1) monoethylenically unsaturated monomers, or (2) polyethylenically unsaturated monomers other than the polyvinyl benzenes described above, or (3) a mixture of (1) and (2).

Resins of this type work well as adsorbents of compounds having both a hydrophobic portion and a hydrophilic portion. In the present invention, the undesirable off-flavor compounds have just such hydrophobic and hydrophilic portions whereas the bulk of the hydrolysis extract consists of hydrophilic carbohydrate compounds. The undesirable off-flavor compounds are adsorbed onto the non-ionogenic macroreticular cross-linked resin whereas said carbohydrate constituents are not, thereby providing an upgraded hydrolyzed coffee extract from which the off-flavor compounds have been removed.

The macroreticular cross-linked resin is generally available in granular form which granules are of 16 mesh (U.S. Standard Sieve Screen) to 50 mesh. The preferred size for the resin granules is between 20 mesh and 50 mesh.

Contact of said resin and the hydrolyzed coffee extract may be carried out in any vessel providing good solid-liquid contact. It has been found that passing the hydrolysis extract through a bed of resin packed in a column having a length between 5 and 20 times the width is convenient for meeting the objects of the invention.

The temperature at which said contact takes place is not particularly important. Adsorption capacity is generally increased at lower temperature and this invention has been practiced at ambient conditions. It has been found though, that contact between the hydrolysis extract and the resin may be made between 15°C and 180°C.

The length of time needed for the contact, known as residence time, is related to temperature to the extent that a given temperature may increase adsorption rate thereby cutting residence time. Though there is no upper limit on the contact time, it is preferred to maintain the lowest such time necessary for sufficient upgrading in order to maximize process productivity.

The contact of the hydrolysis extract with the resin may be carried out over a wide range of concentrations of said hydrolysis coffee extract. The concentration should not exceed 30% by weight hydrolysis solids, otherwise viscosity effects begin to hinder adsorption. On the other hand, 1% by weight hydrolysis solids is the lower limit below which the invention is not very practical.

A significant operating variable of this invention is the weight ratio of hydrolyzed coffee solids to the weight of resin charged in the vessel. If said ratio is too great, the objects of the invention will not be met. On the other hand, process economics are severely affected if a particularly low ratio is used. The weight ratio of hydrolyzed coffee solids to the weight of resin should range between .1 kg. hydrolysis solids/1 kg. resin and 25 kg. hydrolysis solids/1 kg. resin if upgrading is to be achieved. The preferred ratio is from .3 kg. hydrolysis solids/1 kg. resin to 5 kg. hydrolysis solids/1 kg. resin.

The macroreticular cross-linked resin is considered spent once said resin has adsorbed its capacity of undesirable off-flavor compounds. The spent resin may be stripped of the undesirable off-flavor compounds by contact with steam or an organic solvent. In the case where an organic solvent is used, it must be ensured that all such organic solvent has been removed from the resin before a fresh portion of hydrolyzed coffee extract is contacted with said regenerated resin. The undesirable off-flavor compounds stripped from the resin may simply be discarded.

The utility of the upgraded hydrolyzed coffee extract is in its combination with other coffee extracts. For instance, the upgraded hydrolysis extract may be combined with an atmospheric extract hereinbefore described. The resulting combination is a coffee extract which has the excellent flavor of the atmospheric extract but which also has the high yield demanded of a commercial coffee operation.

Similarly, hydrolyzed coffee extract may be obtained by the acid hydrolysis of spent coffee grounds, upgraded and then combined with a conventional commercial coffee extract containing both hydrolysis and atmospheric extracts. The result is a good tasting commercial extract of still higher yield. Such increased yield represents a significant economic advantage for a commercial coffee operation. Either combination from above may be dried in one of the conventional manners, providing a superior soluble coffee.

Best Mode For Carrying Out The Invention

The following example more fully illustrates the invention.

(A)   500 ml. of hydrolyzed coffee extract having 5.3% by weight hydrolysis coffee solids was stirred with 30g. of non-ionogenic macroreticular cross-linked resin for 2 hours at ambient temperature. The slurry was filtered and the recovered upgraded hydrolysis extract was diluted to 1.2% by weight coffee solids for tasting. The specific resin was XAD-4 resin available from Rohm & Haas Co., Philadelphia, Pa.

(B) 500 ml. of hydrolyzed coffee extract having 5.3% by weight hydrolysis coffee solids was stirred with 90 g. of XAD-4 resin for 4 hours at ambient temperature. The slurry was filtered and the recovered upgraded hydrolysis extract was diluted to 1.2% by weight coffee solids for tasting.

(C) 1000 ml. of hydrolyzed coffee extract having 5.3% by weight hydrolysis coffee solids was passed through a column (5.0 cm x 34 cm.) charged with 500 g. XAD-4 resin at a flow rate of 30 ml./min. The exiting upgraded hydrolysis extract was collected as 10 distinct fractions each of which was diluted to 1.2% by weight coffee solids for tasting.

Each of the upgrading methods of A, B and C provided samples which, when tasted, were markedly improved in flavor in comparison to an untreated control. The sample prepared in A was judged to have the best flavor.

Claims

1. A process for removing the undesirable off-flavor compounds from a hydrolysis coffee extract which comprises contacting said extract with a non-ionogenic macroreticular cross-linked resin.

2. The process of Claim 1 wherein the non-ionogenic macroreticular resin is in the form of granules, which granules are not retained on a 16 mesh (U.S. Standard Sieve Screen) but which granules are retained on a 50 mesh.

3. The process of Claim 1 wherein the contact between the hydrolyzed coffee extract and the resin is carried out by passing said hydrolysis extract through a bed of said resin packed in a column, which column has a length between 5 and 20 times the width.

4. The process of Claim 1 wherein the contact between the hydrolyzed coffee extract and the resin is carried out at a temperature of from 15°C to 180°C.

5. The process of Claim 1 wherein the weight ratio of hydrolyzed coffee solids to the weight of resin ranges between .1 kg. hydrolysis solids/1 kg. resin and 25 kg. hydrolysis solids/1 kg. resin.

6. The process of Claim 1 wherein the concentration of the hydrolysis extract is from 1% by weight hydrolysis solids to 30% by weight hydrolysis solids.

7. A process for producing a soluble coffee which comprises combining upgraded hydrolysis extract from Claim 1 with atmospheric extract and drying said combination.

8. A soluble coffee produced from the process of Claim 7.

9. A process for producing a soluble coffee which comprises combining upgraded extract from Claim 1 with conventional commercial coffee extract and drying said combination.

10. A soluble coffee produced from the process of Claim 9.

11. The process of Claim 1 wherein the hydrolysis coffee extract is obtained by the acid hydrolysis of spent coffee grounds.